# EUROPEAN PATENT SPECIFICATION

(11) **EP 1 926 583 B1**
(45) Date of publication and mention of the grant of the patent: **01.07.2009**
(21) Application number: 06764932.7
(22) Date of filing: 12.07.2006
(51) Int. Cl.: B29C 59/04, B23C 3/32

(54) **APPARATUS FOR FORMING ANNULAR GROOVES ON THE OUTER SURFACE OF A CABLE OR TUBE**
VORRICHTUNG ZUM BILDEN VON RINGFÖRMIGEN NUTEN IN DER AUSSENFLÄCHE EINES KABELS ODER ROHRS
APPAREIL POUR REALISER DES RAINURES ANNULAIRES DANS LA SURFACE EXTERIEURE D'UN CÂBLE ON D'UN TUYAU

(30) Priority: 13.07.2005 GB 0514372
(43) Date of publication of application: 04.06.2008
(73) Proprietor: MINIFLEX LIMITED, Framlingham, Suffolk IP13 9EZ (GB)
(72) Inventor: JENKINS, Peter David, Framlingham, Woodbridge IP13 9RH (GB); JENKINS, Daniel Owen, Framlingham, Woodbridge IP13 9RH (GB)
(74) Representative: McLean, Robert Andreas
(86) International application number: PCT/GB2006/002576
(87) International publication number: WO 2007/007097

(56) References cited:
- EP-B1- 0 765 214
- JP-A- 61 067 523
- US-A- 3 735 616
- US-A- 4 435 968
- US-A- 4 514 997

## Description

### BACKGROUND

### a. Field of the Invention

The present invention relates to the processing of linear members such as cables or tubes, and in particular to an apparatus for processing elongated members to form a plurality of annular grooves in their outer surfaces.

### b. Related Art

Document US-A-4 514 997 discloses an apparatus of the kind mentionned above comprising a cylindrical cutter received within a cutter rotation means.

EP 765 214 discloses an apparatus suitable for forming a series of parallel grooves in the outer wall of a smooth bore tube. The apparatus comprises three rollers which are disposed around the tube as it is passed through the apparatus. One or more of the rollers are grooved and the rotation of the grooved roller(s) forms the sequence of grooves within the outer surface of the tube.

One of the limitations of the apparatus disclosed in EP 765 214 is that the triangular arrangement of the rollers form an interstice through which the tube is passed. The geometry of this arrangement means that it is difficult to process small tubes, for example tubes having a diameter of 3 mm or less.

Our co-pending application GB 0421439.1, filed on 27th September 2004, describes an apparatus in which a similar series of parallel grooves may be formed in the outer wall of a smooth bore tube. The apparatus comprises two opposed rollers, one or more of which may be grooved to form the grooves in the tube, between which a tube is passed in order to provide the grooving. Furthermore, two opposed positioning means are provided to maintain the position of the tube relative to the opposed rollers. This arrangement allows the two opposed rollers can be brought very close together, enabling grooves to be formed in small tubes, for example tubes having a diameter of less than 3 mm.

One of the disadvantages of the approaches disclosed in both EP 765 214 and GB 0421439.1, is that in order to form grooves small diameter tubes, it is necessary to use small bearings to rotate the rollers that form the grooves. In order to achieve processing speeds that make the production of grooved tubing economically viable it is necessary to rotate these bearings at very high speed, for example in excess of 10 000 rpm. Prolonged operation at these sorts of speeds leads to a significant decrease in the operating lifetime of the bearings. It has believed that the centrifugal forces cause the lubricant within the bearings to be expelled past the seals, which leads to the premature failure of the bearings. The design of the apparatus described in both EP 765 214 and GB 0421439.1 necessitates the use of small bearings that prevent the use of active cooling and lubrication measures that could prolong the operational lifetime of the bearings.

### SUMMARY OF THE INVENTION

According to the present invention there is provided an apparatus for forming a plurality of grooves in the outer surface of an elongate member, the apparatus comprising: a cylindrical cutter, the internal surface of the cylindrical cutter comprising a plurality of cutting means; first and second rotatable positioning means received within the interior of the cylindrical cutter, the first and second rotatable positioning means configured, in use, to hold an elongate member against the internal surface of the cylindrical cutter; the cylindrical cutter being received within a cutter rotation means such that the rotation of the cutter rotation means causes the cylindrical cutter to rotate, the rotation of the cylindrical cutter, in use, causing the first and second rotatable positioning means and an elongate member held against the internal surface of the cylindrical cutter to rotate relative to the internal surface of the cylindrical cutter such that the elongate member is advanced through the cylindrical cutter and the plurality of cutting means form a plurality of grooves in the outer surface of the elongate member.

Such an arrangement provides a significant advantage, as the present invention causes the tube to be rotated inside a cylindrical cutter as opposed to known techniques wherein one or more cutters are rotated around the outside of a tube. The present invention enables the use of larger bearings, which can be lubricated and cooled hydraulically, for example by pumping cooled oil into the bearing. The larger bearings are also capable of prolonged operation at high speeds, for example in excess of 10000 rpm.

### BRIEF DESCRIPTION OF THE DRAWINGS

Figure 1 shows a schematic depiction of a cross-section of an apparatus according to the present invention;
Figure 2 shows a schematic depiction of a cut-away axial view of an apparatus according to the present invention;
Figure 3 shows a schematic depiction of a cut-away perspective view of an apparatus according to the present invention;
Figure 4 shows a schematic depiction of a cut-away side view of an apparatus according to the present invention;
Figure 5 shows a schematic depiction of a first cylindrical cutter for use with an apparatus according to the present invention; and
Figure 6 shows a schematic depiction of a second cylindrical cutter for use with an apparatus according to the present invention.

### DETAILED DESCRIPTION

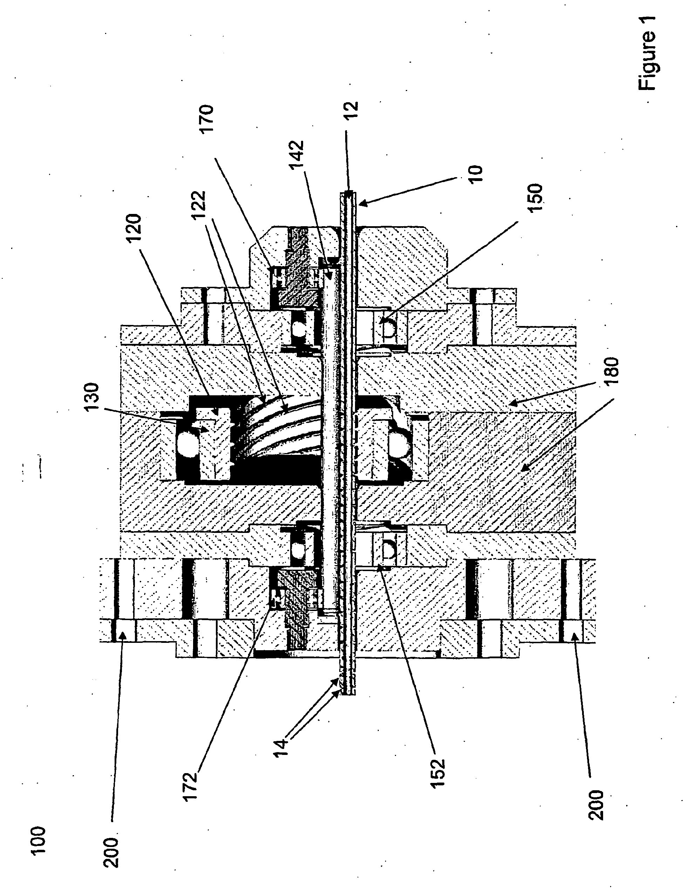

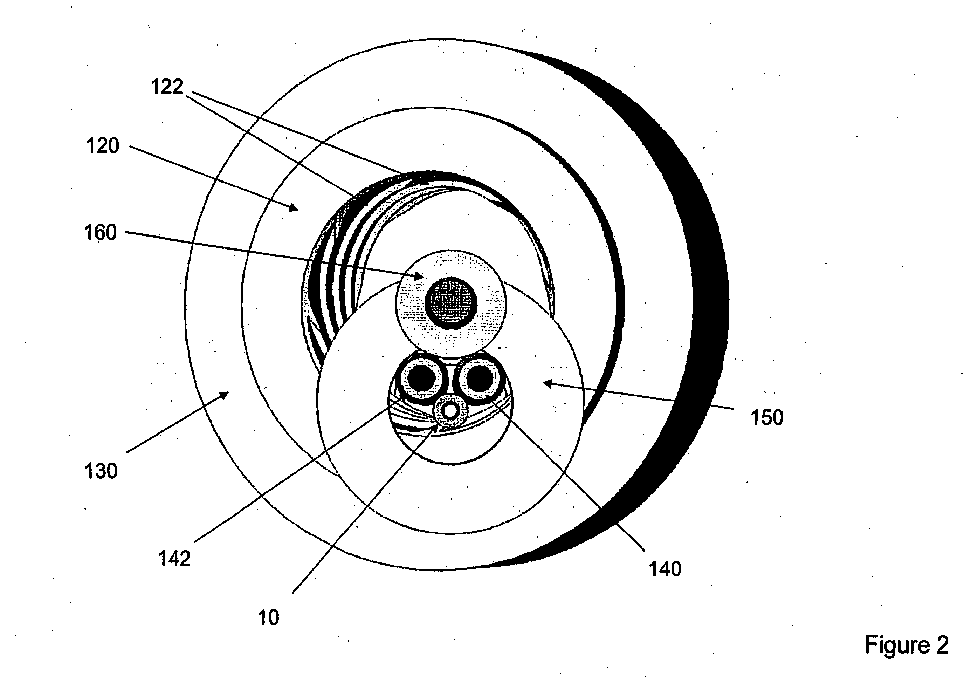

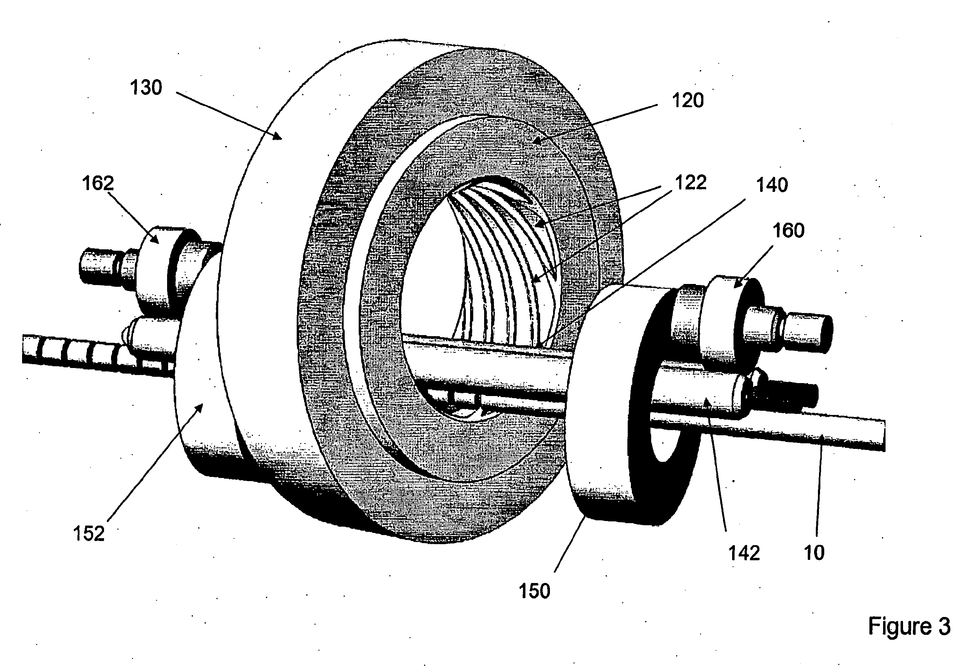

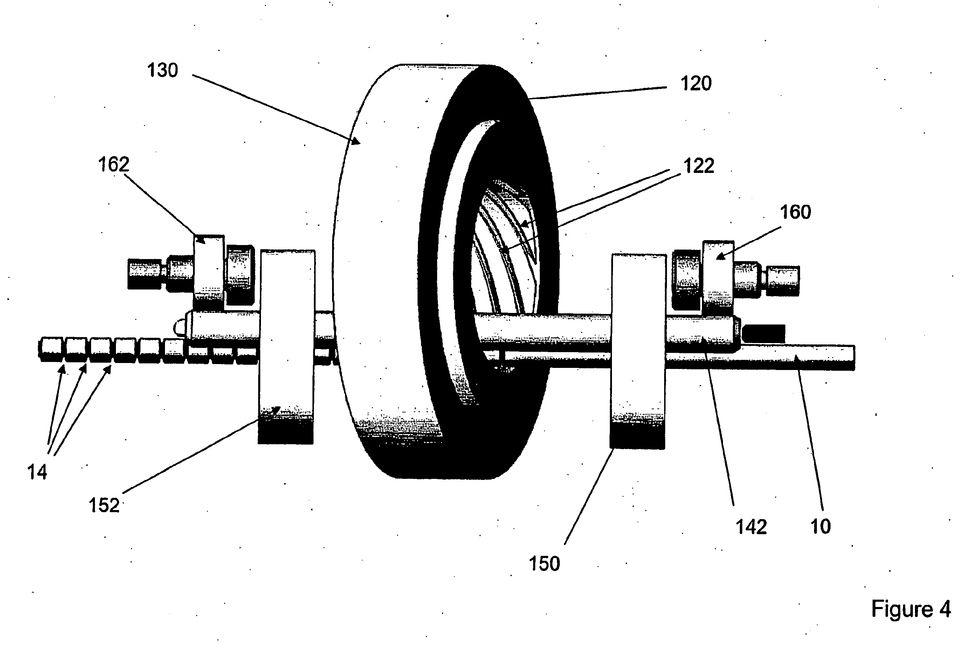

Figures 1 to 4 show a schematic depiction of an apparatus 100 according to the present invention: Figure 1 shows a cross-section of the apparatus; Figure 2 shows a cut-away axial view of the apparatus; Figure 3 shows a cut-away perspective view of the apparatus; and Figure 4 shows a cut-away side view of the apparatus.

The apparatus 100 comprises a rotatable cylindrical cutter 120, which is received within and coupled to a cutter bearing 130. The inner surface of the rotatable cylindrical cutter comprises a plurality of cutting edges 122. Received within the interior of the rotatable cylindrical cutter are first and second positioning rollers 140 & 142. which extend beyond either end of the rotatable cylindrical cutter. First and second positioning bearings 150 & 152 are provided at the first and second ends of the first and second positioning rollers, the first and second positioning bearings being located outside of the rotatable cylindrical cutter. The first and second positioning bearings are configured such that they are in contact with the outer surface of both the first and second positioning rollers. There is also provided first and second control rollers 160, 162, that are received outside of the rotatable cylindrical cutter and are configured to retain contact with both of the first and second positioning rollers. First and second control bearings 170, 172 are provided to enable the first and second control rollers to be rotated. A housing 180 is provided to receive these components. The housing may comprise a plurality of components that interconnect to form the housing. The housing may comprise connection means 200 to enable the apparatus to be connected to a headstock to enable rotational motion to be provided to the apparatus.

In use, a linear member 10, for example a tube made from a plastics material having a hollow centre 12, is received within the apparatus and is processed to form a plurality of grooves 14 in the outer surface of the tube. When a tube is received within the apparatus, its longitudinal axis is parallel with the longitudinal axes of the first and second positioning rollers. The rotatable cylindrical cutter is aligned so as to be offset with respect to the common longitudinal axis of the tube and the first and second positioning rotters.

As is well-known, the formation of the plurality of grooves 14 improves the resistance of the tube to excessive bending forces and this is of particular benefit when an optical fibre is received within the tube. A tube 10 which is received within the rotatable cylindrical cutter is urged against the interior of the cylindrical cutter by the first and second positioning rollers. The position of the first and second positioning rollers is maintained by the first and second control rollers which prevent the first and second positioning rollers from losing contact with the tube. The rotation of the cutter bearing causes the cylindrical cutter to be rotated, such that the cutter is rotated around the outside of the tube. The rotation of the cutter around the tube, in combination with the urging of the tube against the inner surface of the cutter by the first and second positioning rollers causes the cutting edges 122 to form grooves in the outer wall of the tube. The motion of the cutting edges also acts to advance the tube through the apparatus. It will be noted that the cutting edges comprise a substantially helicoidal geometry such that the grooves that are formed in the tube are circumferential.

The angle of the rotatable cylindrical cutter with respect to the common longitudinal axis of the tube and the first and second positioning rollers may be within the range of 5° to 40° but it has been observed that the optimum value is in the range of 20°-30° and that a preferred value is substantially 25°.

A further advantage of the present invention is that the cutter may accommodate a wide range of tube diameters and this will reduce the time taken to change production from a first diameter of tube to a second diameter of tube. For the production of tubes which are to receive optical fibres, which will typically have an outer diameter of 1 to 10 mm, then it is believed that this size range can be readily produced using the same cutter. It will be understood that the separation of the first and second positioning rollers from the interior wall of the cylindrical cutter will vary with the outer diameter of the tube. Accordingly, the apparatus may allow the position of the first and second positioning rollers to be varied in order to accept a tube of a given diameter. Alternatively, the first and second positioning rollers may be replaced with positioning rollers having different diameter to accommodate the tube. The positioning and or size of the control rollers must also be variable in order to retain the contact between the first and second positioning rollers and the first and second control rollers.

The apparatuses disclosed in our earlier applications (EP 765 214 and GB 0421439.1) operate under a different principle, namely that individual cutters are rotated on bearings around the outside of the tube in which the grooves are to be formed. A consequence of this is that it necessitates the use of small bearings which are not suited to prolonged operation at high speeds. The present invention allows the rotatable cylindrical cutter to be rotated using a significantly larger bearing which is capable of prolonged operation at high speeds (for example 10 000 rpm and greater) due to its greater size and because it is possible to pump oil into the bearing to provide lubrication. The oil may be cooled in order to regulate the temperature of the bearing.

Furthermore, the known methods described in EP 765 214 and GB 0421439.1 require more than one rotation of the cutters to form a single groove in the exterior of the tube. In the present invention, the cutter provides a plurality of cutting edges such that a single rotation of the cutter causes s plurality of grooves to be formed in the tube.

It is believed that due to the combination of these effects the use of an apparatus according to the present invention should enable tubing to be manufactured and processed to form grooves at a rate of 100 metres per minute, which is substantially greater than the 20-30 metres per minute that can be sustained using conventional techniques.

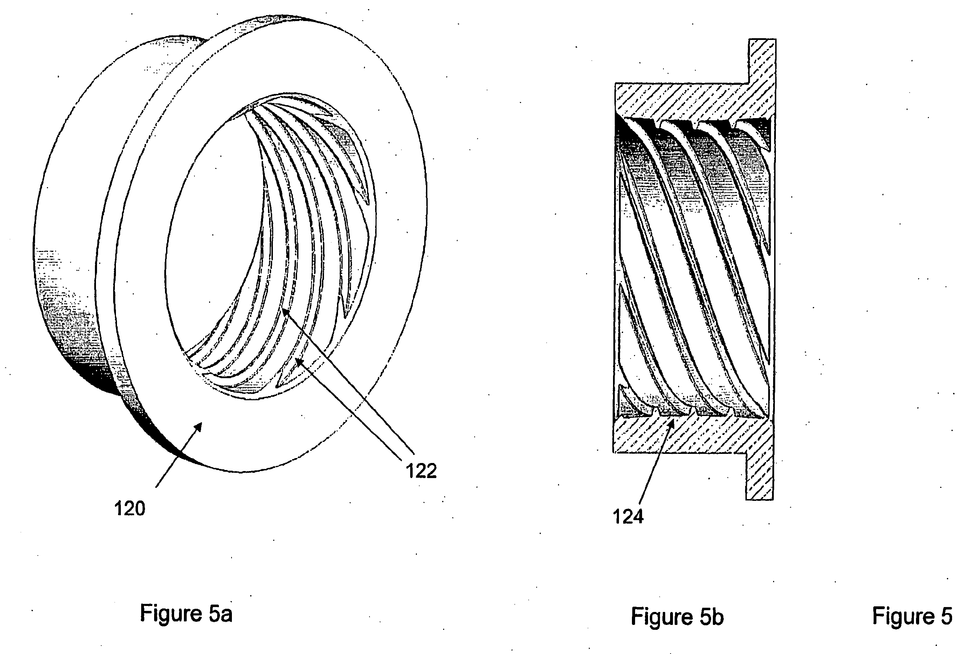

Figure 5a shows a schematic depiction of a perspective view of a first embodiment of cylindrical cutter 120 and Figure 5b shows a schematic depiction of a cross-sectional view of cylindrical cutter 120. The cylindrical cutter comprises a plurality of cutting edges 122 that are disposed at an angle to the axis of the cutter. Preferably, the inner surface of the cylindrical cutter has a curved inner surface 124. As described above, the cylindrical cutter is rotationally offset with regard to the axis of the tube and the first and second positioning rollers.

If the longitudinal axis of the cylindrical cutter were to be parallel to that of the tube then a tube received within the cylindrical cutter would have a continuous line of contact with the cylinder (assuming that the action of the positioning rollers causes the cutting edges to be received within the wall of the tube). By rotating the cylindrical cutter relative to the tube, there is no longer a line of contact between the cutter and the tube, but instead there will be two separate points of contact separated by a region for which there is a gap between the tube and the surface of the cutter. Given the rotational offset between the cutter and the tube it is possible to calculate the position of the tube relative to the cutter and modify the shape of the internal surface of the cutter such that there is either a continuous line of contact between the tube and the cutter or a shorter separation between the two separate points of contact between the tube and the cutter. It will be appreciated that the number of cutting edges in the cutter is of no significance to the operation of the present invention but it is thought that 6-10 cutting edges is a suitable range as it provides the efficiency of the preset invention by allowing multiple grooves to be formed with a single rotation of the cutter without causing unnecessary complication in the manufacture or the operation of the cutter.

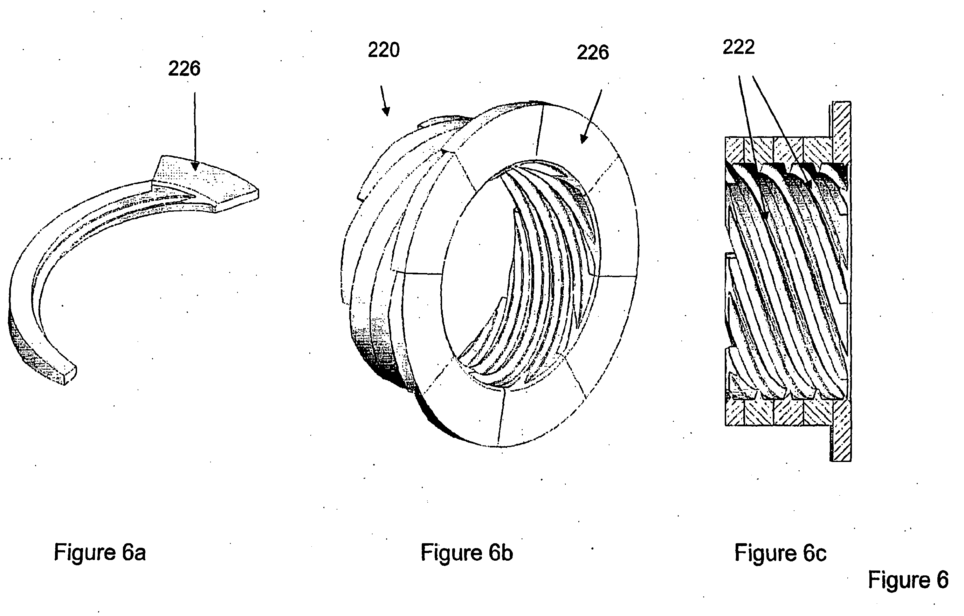

Figure 6 shows a schematic depiction of a further embodiment of cylindrical cutter 220 that comprises a plurality of cutting elements 226; Figure 6a shows a perspective view of a single cutting element 226; Figure 6b shows a schematic depiction of a perspective view of cylindrical cutter 220 formed from a plurality of cutting elements 226 and Figure 6c shows a schematic depiction of a cross-sectional view of cylindrical cutter 220 formed from a plurality of cutting elements 226. Preferably each of the cutting elements comprises an entire cutting edge although it will be understood that one or more cutting elements may be combined to form a single cutting edge. Although Figure 6c shows that the interior surface of the cutter is parallel to the longitudinal axis of the cutter, it will be understood that the inner surface of the cutter may be curved, in a similar manner to that shown n Figure 5b.

It has been found that the grooves in the tube are best formed when more than one cutting edge is used to form the groove. This can be achieved by appropriate spacing of the cutting edges in the cylindrical cutter so that a subsequent cutting edge will fall into the groove formed by a previous cutting edge. Preferably each of the cutting edges in the cylindrical cutter has a length that is substantially equal to the circumference of the tube such that each cutting edge forms an entire groove.

## Claims

1. An apparatus (100) for forming a plurality of grooves (14) in the outer surface of an elongate member (10), the apparatus (100) comprising:
a cylindrical cutter 120, the internal surface of the cylindrical cutter (120) comprising a plurality of cutting means (122);
first and second rotatable positioning means (140, 142) received within the interior of the cylindrical cutter (120), the first and second rotatable positioning means (140, 142) configured, in use, to hold the elongate member (10) against the internal surface of the cylindrical cutter (120);
the cylindrical cutter (120) being received within a cutter rotation means (130) such that the rotation of the cutter rotation means (130) causes the cylindrical cutter (120) to rotate, the rotation of the cylindrical cutter (120), in use, causing the first and second rotatable positioning means and the elongate member held against the internal surface of the cylindrical cutter (120) to rotate relative to the internal surface of the cylindrical cutter (120) such that the elongate member (10) is advanced through the cylindrical cutter (120) and the plurality of cutting means (122) form a plurality of grooves (14) in the outer surface of the elongate member (10).

2. An apparatus according to claim 1, further comprising a rotatable control means (160, 162), the rotatable control means (160, 162) being in contact with both the first and second rotatable positioning means (140, 142).

3. An apparatus according to claim 2, wherein the rotatable control means (160, 162) comprises first (160) and second (162) control rollers, the first control roller (160) being located in contact with the first and second rotatable positioning means (140, 142) near the first end of the first and second rotatable positioning means (140, 142) and the second control roller (162) being located in contact with the first and second rotatable positioning means (140, 142) to the second end of the first and second rotatable positioning means (140, 142).

4. An apparatus according to claim 2 or claim 3, wherein the apparatus further comprises one or more control rotation means (170, 172), the or each control rotation means (170, 172) being configure to, in use, rotate the rotatable control means (160, 162).

5. An apparatus according to any preceding claim, wherein the cylindrical cutter (120) comprises a plurality of cutting edges (122), each of the plurality of cutting edges (122) comprising one cutting means.

6. An apparatus according to claim 5, wherein the cutting edges (122) are inclined at an angle to the longitudinal axis of the cylindrical cutter (120).

7. An apparatus according to claim 6, wherein the cutting edges (122) are inclined at an angle of between 10° and 40° relative to the longitudinal axis of the cylindrical cutter (120).

8. An apparatus according to claim 6 or claim 7, wherein the cutting edges (122) are inclined at an angle of substantially 25° relative to the longitudinal axis of the cylindrical cutter.

9. An apparatus according to any preceding claim, wherein longitudinal inner surface of the cylindrical cutter (120) is arcuate.

10. An apparatus according to any preceding claim, wherein the cylindrical cutter (120) is rotationally offset with respect to the axis of the first and second rotatable positioning means (140,142) and an elongate member (10) received within the apparatus (100).

## Patentansprüche

1. Vorrichtung (100) zum Bilden mehrerer Rillen (14) in der Außenfläche eines länglichen Elementes (10), wobei die Vorrichtung (100) Folgendes umfasst:
eine zylindrische Schneidvorrichtung (120), wobei die Innenfläche der zylindrischen Schneidvorrichtung (120) mehrere Schneidmittel (122) umfasst,
ein erstes und ein zweites drehbares Positioniermittel (140, 142), die in dem Inneren der zylindrischen Schneidvorrichtung (120) aufgenommen sind, wobei das erste und das zweite drehbare Positioniermittel (140, 142) so konfiguriert sind, dass sie im Gebrauch das längliche Element (10) gegen die Innenfläche der zylindrischen Schneidvorrichtung (120) halten,
wobei die zylindrische Schneidvorrichtung (120) in einem Schneidvorrichtungsdrehmittel (130) aufgenommen ist, so dass die Drehung des Schneidvorrichtungsdrehmittels (130) bewirkt, dass die zylindrische Schneidvorrichtung (120) sich dreht, und die Drehung der zylindrischen Schneidvorrichtung (120) im Gebrauch bewirkt, dass das erste und das zweite drehbare Positioniermittel und das längliche Glied gegen die Innenfläche der zylindrischen Schneidvorrichtung (120) gehalten werden, um sich bezüglich der Innenfläche der zylindrischen Schneidvorrichtung (120) zu drehen, so dass das längliche Element(10) durch die zylindrische Schneidvorrichtung (120) vorgerückt wird und die mehreren Schneidmittel (122) mehrere Rillen (14) in der Außenfläche des länglichen Elementes (10) bilden.

2. Vorrichtung nach Anspruch 1, die weiterhin ein drehbares Steuermittel (160, 162) umfasst, wobei das drehbare Steuermittel (160, 162) sowohl mit dem ersten als auch mit dem zweiten drehbaren Positioniermittel (140, 142) in Kontakt steht.

3. Vorrichtung nach Anspruch 2, wobei das drehbare Steuermittel (160, 162) eine erste (160) und eine zweite (162) Steuerrolle umfasst, wobei die erste Steuerrolle (160) in Kontakt mit dem ersten und dem zweiten drehbaren Positioniermittel (140, 142) in der Nähe des ersten Endes des ersten und des zweiten drehbaren Positioniermittels (140, 142) und die zweite Steuerrolle (162) in Kontakt mit dem ersten und dem zweiten drehbaren Positioniermittel (140, 142) in der Nähe des zweiten Endes des ersten und des zweiten drehbaren Positioniermittels (140, 142) angeordnet ist.

4. Vorrichtung nach Anspruch 2 oder 3, wobei die Vorrichtung weiterhin ein oder mehrere Steuerdrehmittel (170, 172) umfasst, wobei das oder jedes Steuerdrehmittel (170, 172) dazu konfiguriert ist, im Gebrauch das drehbare Steuermittel (160, 162) zu drehen.

5. Vorrichtung nach einem der vorhergehenden Ansprüche, wobei die zylindrische Schneidvorrichtung (120) mehrere Schneidkanten (122) umfasst, wobei jede der mehreren Schneidkanten (122) ein Schneidmittel umfasst.

6. Vorrichtung nach Anspruch 5, wobei die Schneidkanten (122) in einem Winkel zur Längsachse der zylindrischen Schneidvorrichtung (120) geneigt sind.

7. Vorrichtung nach Anspruch 6, wobei die Schneidkanten (122) in einem Winkel zwischen 10° und 40° zur Längsachse der zylindrischen Schneidvorrichtung (120) geneigt sind.

8. Vorrichtung nach Anspruch 6 oder 7, wobei die Schneidkanten (122) in einem Winkel von im Wesentlichen 25° zur Längsachse der zylindrischen Schneidvorrichtung geneigt sind.

9. Vorrichtung nach einem der vorhergehenden Ansprüche, wobei die längliche Innenfläche der zylindrischen Schneidvorrichtung (120) bogenförmig ist.

10. Vorrichtung nach einem der vorhergehenden Ansprüche, wobei die zylindrische Schneidvorrichtung (120) bezüglich der Achse des ersten und des zweiten drehbaren Positioniermittels (140, 142) drehversetzt ist und ein längliches Element(10) in der Vorrichtung (100) aufgenommen ist.

## Revendications

1. Appareil (100) pour réaliser une pluralité de rainures (14) dans la surface extérieure d'un élément allongé (10), l'appareil (100) comprenant :
un dispositif de coupe cylindrique (120), la surface interne du dispositif de coupe cylindrique (120) comprenant une pluralité de moyens de coupe (122) ;
des premier et second moyens de positionnement rotatifs (140, 142) reçus à l'intérieur du dispositif de coupe cylindrique (120), les premier et second moyens de positionnement rotatifs (140, 142) étant configurés, en service, pour maintenir l'élément allongé (10) contre la surface interne du dispositif de coupe cylindrique (120) ;
le dispositif de coupe cylindrique (120) étant reçu à l'intérieur d'un moyen de rotation de dispositif de coupe (130) de manière que la rotation du moyen de rotation de dispositif de coupe (130) force le dispositif de coupe cylindrique (120) à tourner, la rotation du dispositif de coupe cylindrique (120), en service, amenant les premier et second moyens de positionnement rotatifs et l'élément allongé maintenu contre la surface interne du dispositif de coupe cylindrique (120) à tourner par rapport à la surface interne du dispositif de coupe cylindrique (120) de manière que l'élément allongé (10) soit avancé à travers le dispositif de coupe cylindrique (120) et la pluralité de moyens de coupe (122) réalise une pluralité de rainures (14) dans la surface extérieure de l'élément allongé (10).

2. Appareil selon la revendication 1, comprenant en outre un moyen de commande rotatif (160, 162), le moyen de commande rotatif (160, 162) étant en contact à la fois avec les premier et second moyens de positionnement rotatifs (140, 142).

3. Appareil selon la revendication 2, dans lequel le moyen de commande rotatif (160, 162) comprend des premier (160) et second (162) rouleaux de commande, le premier rouleau de commande (160) étant positionné en contact avec les premier et second moyens de positionnement rotatifs (140, 142) près de la première extrémité des premier et second moyens de positionnement rotatifs (140, 142) et le second rouleau de commande (162) étant positionné en contact avec les premier et second moyens de positionnement rotatifs (140, 142) près de la seconde extrémité des premier et second moyens de positionnement rotatifs (140, 142).

4. Appareil selon la revendication 2 ou la revendication 3, dans lequel l'appareil comprend en outre un ou plusieurs moyens de rotation de commande (170, 172), le ou chaque moyen de rotation de commande (170, 172) étant configuré, en service, pour faire tourner le moyen de commande rotatif (160, 162).

5. Appareil selon l'une quelconque des revendications précédentes, dans lequel le dispositif de coupe cylindrique (120) comprend une pluralité de bords de coupe (122), chacun de la pluralité de bords de coupe (122) comprenant un moyen de coupe.

6. Appareil selon la revendication 5, dans lequel les bords de coupe (122) sont inclinés d'un angle par rapport à l'axe longitudinal du dispositif de coupe cylindrique (120).

7. Appareil selon la revendication 6, dans lequel les bords de coupe (122) sont inclinés d'un angle entre 10° et 40° par rapport à l'axe longitudinal du dispositif de coupe cylindrique (120).

8. Appareil selon la revendication 6 ou la revendication 7, dans lequel les bords de coupe (122) sont inclinés d'un angle sensiblement de 25° par rapport à l'axe longitudinal du dispositif de coupe cylindrique.

9. Appareil selon l'une quelconque des revendications précédentes, dans lequel la surface intérieure longitudinale du dispositif de coupe cylindrique (120) est arquée.

10. Appareil selon l'une quelconque des revendications précédentes, dans lequel le dispositif de coupe cylindrique (120) est décalé en rotation par rapport à l'axe des premier et second moyens de positionnement rotatifs (140, 142) et d'un élément allongé (10) reçu dans l'appareil (100).
